# EUROPÄISCHE PATENTSCHRIFT

(11) **EP 2 511 922 B1**
(45) Veröffentlichungstag und Bekanntmachung des Hinweises auf die Patenterteilung: **18.09.2013**
(21) Anmeldenummer: 12160065.4
(22) Anmeldetag: 19.03.2012
(51) Int. Cl.: H01G 4/38, H01G 2/08

(54) **Speichereinheit zum Speichern elektrischer Energie mit einem Kühlelement**
Storage unit for storing electrical energy with a cooling element
Unité de stockage pour le stockage d'énergie électrique avec un élément de refroidissement

(30) Priorität: 13.04.2011 DE 102011007315
(43) Veröffentlichungstag der Anmeldung: 17.10.2012
(73) Patentinhaber: Robert Bosch GmbH, 70442 Stuttgart (DE)
(72) Erfinder: Hornung, Stefan, 70771 Leinfelden-Echterdingen (DE); Huehner, Stefan, 72127 Kusterdingen (DE); Dillmann, Adolf, 72525 Muensingen (DE)

(56) Entgegenhaltungen:
- WO-A1-2006/048431
- DE-A1-102004 032 903

## Beschreibung

### Stand der Technik

Die Erfindung betrifft eine Speichereinheit zum Speichern elektrischer Energie. Die Speichereinheit weist wenigstens einen Energiespeicher auf, wobei der Energiespeicher wenigstens einen positiven Anschluss und wenigstens einen negativen Anschluss aufweist. Der Energiespeicher ist ausgebildet, über den positiven Anschluss und den negativen Anschluss mit elektrischer Energie aufgeladen zu werden und zum Entladen die elektrische Energie über die Anschlüsse wieder abzugeben.

Bei aus dem Stand der Technik bekannten Speichereinheiten zum Speichern elektrischer Energie, beispielsweise bei Zwischenkreiskondensatoren, welche wenigstens einen Wickelkondensator aufweisen, besteht das Problem, dass während eines Betriebs des Kondensators in dem Kondensator Verlustwärme entsteht, welche den Kondensator erwärmt. Die Wärme kann von einer äußeren, beispielsweise isolierten Wicklung über ein Kunststoffgehäuse an eine Umgebung abgegeben werden.

Die Patentschrift WO 2006/048431 offenbart eine Speichereinheit zum Speichern von Energie mit Kühlelementen. DE 10 2004 032 903 zeigt eine Leiterplate und die Verwendung einer Wärmeleitpaste.

### Offenbarung der Erfindung

Gemäß der durch Patentanspruch 1 definierten Erfindung ist bei der Speichereinheit der eingangs genannten Art der positive und/oder der negative Anschluss mindestens mittelbar wenigstens thermisch mit einem wärmeleitfähig ausgebildeten Kühlelement wirkverbunden, sodass über den elektrischen Anschluss Wärme aus dem Energiespeicher an das Kühlelement abgeführt werden kann. Damit wird erreicht, dass im Betrieb des Energiespeichers Temperaturspitzen vermieden werden und der Energiespeicher bei höheren Umgebungstemperaturen und höheren Strömen betrieben werden kann.

Bevorzugt bildet ein Oberflächenbereich des Kühlelements eine Außenfläche der Speichereinheit und ist bevorzugt ausgebildet, die Wärme über die Außenfläche der Speichereinheit an eine Umgebung oder ein weiteres Kühlelement abzugeben. Das Kühlelement kann so vorteilhaft als Wärmesenke zum Abführen der im Inneren des Energiespeichers erzeugten Verlustwärme dienen.

Das Kühlelement ist bevorzugt eine Platte. Weiter bevorzugt bildet die Platte einen Boden der Speichereinheit. Die Platte ist beispielsweise durch eine Aluminiumplatte gebildet, welche bevorzugt eine Kontaktfläche als Außenfläche zum Ankoppeln an eine weitere Wärmesenke, insbesondere einen Kühlkörper mit Kühlrippen aufweist.

Die Platte ist bevorzugt flach ausgebildet. Die Kontaktfläche ist bevorzugt eben ausgebildet.

Erfindungsgemäß weist die Speichereinheit eine mit dem positiven Anschluss verbundene Kontaktschiene, und eine mit dem negativen Anschluss verbundene Kontaktschiene auf, wobei die Kontaktschienen jeweils mit wenigstens einem äußeren elektrischen Anschluss verbunden sind und jeweils ausgebildet sind, den elektrischen Anschluss des Energiespeichers mit dem äußeren Anschluss elektrisch zu verbinden.

In einer bevorzugten Ausführungsform ist ein Wärmeübergangswiderstand von dem Energiespeicher zu einer Umgebung über das Gehäuse größer als ein Wärmeübergangswiderstand von dem Energiespeicher über die Anschlüsse hin bis zu dem Kühlelement. So kann vorteilhaft über die elektrischen Anschlüsse des Energiespeichers, insbesondere dem positiven und dem negativen Anschluss des Energiespeichers, Verlustwärme, die in dem Energiespeicher entsteht, über die Anschlüsse des Energiespeichers, weiter bevorzugt über die Kontaktschiene bis hin zu dem Kühlelement fließen. So ist ein über die Anschlüsse des Energiespeichers fließender Wärmestrom größer als ein Wärmestrom aus dem Inneren des Energiespeichers über eine Oberfläche des Energiespeichers und weiter über das Gehäuse an eine das Gehäuse umschließende Umgebung.

Erfindungsgemäß ist die positive und/oder negative Kontaktschiene mit dem Kühlelement, insbesondere der Platte thermisch leitend verbunden. So kann vorteilhaft über einen elektrischen Anschluss des Energiespeichers, insbesondere eine elektrische Zuleitung, welche den Anschluss des Energiespeichers mit einem äußeren elektrischen Anschluss der Speichereinheit verbindet, sowohl elektrische Ladung als auch Wärme transportiert werden.

Die Kontaktschiene ist bevorzugt durch einen elektrischen Isolator, welcher thermisch leitend ausgebildet ist, mit dem Kühlelement, insbesondere der Platte verbunden.

In einer bevorzugten Ausführungsform sind die Kontaktschienen jeweils durch ein winkelförmig, insbesondere entlang einer Längserstreckung der Kontaktschiene abgewinkeltes, oder zwei zusammengefügte Teilbleche gebildetes Blech gebildet. Weiter bevorzugt bilden die Kontaktschienen zusammen eine Rinne, in welcher der Energiespeicher wenigstens teilweise aufgenommen ist.

Das Blech der Kontaktschienen weist bevorzugt eine Dicke auf, bei der eine Temperatur, erzeugt durch einen fließenden Strom und der damit verbundenen Verlustwärme, im Blech kleiner ist als eine Temperatur des Anschlusses, so dass Wärme von dem Anschluss über die Kontaktschiene zum Kühlelement fließen kann.

Der Energiespeicher weist beispielsweise eine Quaderform auf. In einer anderen Ausführungsform weist der Energiespeicher eine zylindrische Form auf. Die elektrischen Anschlüsse sind bei der zylindrischen Form jeweils an einer Stirnseite, bevorzugt als elektrisch leitfähige Schicht ausgebildet.

Die Kontaktschienen weisen jeweils bevorzugt jeweils einen Kontakt auf, welcher mit der Kontaktschiene verbunden oder an diese angeformt ist. Der Kontakt ist bevorzugt mit dem elektrischen Anschluss des Energiespeichers verschweißt oder verlötet. So kann die in dem Inneren des Energiespeichers erzeugte Wärme über den positiven und den negativen Anschluss des Energiespeichers, weiter über die Schweiß- oder Lötverbindung zu dem Kontakt der Kontaktschiene, weiter über die Kontaktschiene zu dem Kühlelement, insbesondere der Platte fließen.

In einer bevorzugten Ausführungsform ist die Platte durch einen Teil der Kontaktschiene gebildet. So kann vorteilhaft bei Ausführungsformen, bei denen die elektrischen Kontaktschienen nicht galvanisch von einem Kühlkörper getrennt sein müssen, mit der Kontaktfläche, welche die vorab erwähnte Außenfläche bildet, mit dem Kühlkörper verbunden werden.

Die Platte bildet beispielsweise wenigstens einen Teil eines Bodens der mittels der Kontaktschiene gebildeten Rinne oder Wanne. So kann vorteilhaft ein doppelter Boden gebildet sein, wobei die Platte als Wärmesenke dienen kann.

Erfindungsgemäß sind die Kontaktschienen jeweils mit einem Oberflächenbereich thermisch leitend und elektrisch isolierend miteinander verbunden, so dass Wärme von einer Kontaktschiene über die andere Kontaktschiene zu dem Kühlelement, insbesondere der Platte fließen kann. Mittels der so gebildeten Anordnung weist die vorab erwähnte Rinne oder Wanne einen doppelten Boden auf, wobei die abgewinkelten Abschnitte der die Kontaktschienen bildenden Bleche jeweils - bevorzugt getrennt durch ein elektrisches Isoliermittel - aufeinanderliegen. Das elektrische Isoliermittel ist bevorzugt thermisch leitfähig ausgebildet. So kann vorteilhaft von beiden elektrischen Anschlüssen, insbesondere dem positiven und dem negativen Anschluss des Energiespeichers Wärme an die Platte abgeführt werden, welche beispielsweise als Aluminiumplatte einen Aluminiumboden eines Kunststoffgehäuses bildet, in das der Energiespeicher und die Kontaktschienen zusammen aufgenommen sind. Die Platte weist bevorzugt eine Dicke zwischen 1 Millimeter und 10 Millimeter auf, bevorzugt 3,5 Millimeter.

In einer bevorzugten Ausführungsform der Speichereinheit ist die andere Kontaktschiene mit einer dem Flächenbereich gegenüberliegenden Fläche mit dem Kühlelement, insbesondere der Platte thermisch leitend verbunden. Die andere Kontaktschiene liegt bevorzugt - getrennt mittels eines flach ausgebildeten thermisch leitfähigen elektrischen Isolators - mit der dem Flächenbereich gegenüberliegenden Fläche auf einer der Außenfläche gegenüberliegenden Kontaktfläche der Platte auf. So kann vorteilhaft eine Art Sandwichverbund gebildet sein, bei dem die abgewinkelten Bereiche der Kontaktschienen und die Platte jeweils mit einer flachen Erstreckung und jeweils durch einen elektrischen Isolator getrennt, aufeinanderliegen.

In einer bevorzugten Ausführungsform ist die Platte mit der Außenfläche mit einem thermisch leitfähigen und elektrisch isolierenden flachen Isolator verbunden, sodass die Speichereinheit über den Isolator mit einem Kühlkörper, beispielsweise einen Kühlkörper mit Kühlrippen, oder einem weiteren insbesondere zum Fluidführen ausgebildeten Kühlelement galvanisch getrennt verbunden werden kann.

Der Isolator ist beispielsweise auf die Außenfläche der Platte aufgeklebt. Der Isolator kann beispielsweise durch eine Klebefolie gebildet sein, wobei die Folie eine Kunststofffolie ist, welche auf einem Oberflächenbereich der Kunststofffolie mit einem Klebstoff beschichtet ist.

In einer bevorzugten Ausführung ist der Isolator als Folie ausgebildet, die beidseitig mit dem Klebstoff beschichtet ist. Ein Vorteil der beidseitigen Beschichtung der Folie liegt darin, dass durch die beidseitige Verklebung die Kontaktschienen und dem Kühlelement zu einem Verbund verklebt werden können. Dadurch ergibt sich ein sehr guter Wärmeübergang zwischen den Kontaktschienen und dem Kühlelement da die beidseitig mit Klebstoff beschichtete Folie eine hohe Wärmeleitfähigkeit von bevorzugt mehr als 0,4W/mK aufweist.

Ferner wird durch die beidseitig auf die Folie aufgebrachte Klebestoffschicht der Gesamtaufbau des Energiespeichers zusammengehalten und eine hohe mechanische Festigkeit wird gewährleitstet. Ferner können die Einzelteile somit genau zueinander positioniert werden. Damit wird erreicht, dass im Bereich der elektrischen Anschlüsse sehr kleine Toleranzen möglich sind, wodurch beispielsweise der Einsatz von Einpresspins (Hochleistungskontakte) zur elektrischen Kontaktierung möglich wird. Dies bringt eine Vereinfachung des Fertigungsprozesses sowie eine Verringerung der Herstellungskosten mit sich.

In einer bevorzugten Ausführungsform ist vorgesehen, dass die Folie auf einer oder auf beiden Seiten nur partiell mit dem Klebstoff beschichtet ist. Die von Klebstoff freigehaltenen Abschnitte sind bevorzugt derart geformt, dass sie Kanäle ausbilden, die das Einschließen von Luftblasen in die Klebstoffschicht verhindern. Damit wird verhindert, dass durch in die Klebstoffschicht eingeschlossene Luftblasen unkontrolliert lokale Unterschiede in der Wärmeleitfähigkeit des Isolators auftreten. Der Klebstoff ist beispielsweise ein Acryl klebstoff oder ein Heißkleber.

In einer anderen Ausführungsform ist der Klebstoff ein Phase-Change-Material, insbesondere mit einem Matrixmaterial umfassend Silikon oder Acryl, welche jeweils vorteilhaft beim Phasenwechsel nicht wegfließen können. Das Matrixmaterial weist insbesondere bei dem Matrixmaterial umfassend Silikon oder Acryl - vorteilhaft wenigstens bei Raumtemperatur eine klebrige Eigenschaft auf, so dass die Kontaktschienen mittels des Phase-Change-Materials bei Raumtemperatur aneinanderhaftend zusammengesetzt werden können.

Zur Verbesserung der Wärmeleitfähigkeit weist der insbesondere als Phase-Change-Material ausgebildete Klebstoff bevorzugt Festkörperpartikel auf. Die Festkörperpartikel sind bevorzugt Keramikpartikel, insbesondere Aluminiumoxidpartikel, Siliziumoxidpartikel, Siliziumnitridpatrtikel, Bornitrid-Partikel, AlSi-Partikel, oder Aluminiumnitrid-Partikel, oder eine Kombination aus diesen. Durch das Phase-Change-Material kann vorteilhaft kein Luftpolster zwischen den Kontaktschienen oder der Kontaktschiene und der Platte entstehen, da das Phase-Change-Material bevorzugt eine Phasenwechseltemperatur kleiner als die Betriebstemperatur der Speichereinheit aufweist. Die Phasenwechseltemperatur beträgt beispielsweise zwischen 50 und 70 Grad Celsius. Die Festkörperpartikel weisen jeweils bevorzugt eine gute Wärmeleitfähigkeit auf, so dass mit diesen ein Wärmeleiter gebildet ist, der in das Phase-Change-Material als Matrixmaterial eingebunden ist.

Der Isolator ist bevorzugt eine Polyimidfolie, eine Polyethylenfolie, eine Silicone Molding Resin Folie oder eine Thermoplastic Polyurethan Folie. Die Polyimidfolie weist bevorzugt eine Stärke zwischen 10 und 100 Mikrometer auf, besonders bevorzugt ist eine Stärke von ca. 25 Mikrometern. Die Polyimidfolie ist bevorzugt ausgebildet, eine elektrische Spannung zwischen 1.000 und mindestens 4.000 Volt, besonders bevorzugt bis zu 6700 Volt zu isolieren. Der Energiespeicher ist bevorzugt ein Kondensator, insbesondere ein Wickelkondensator, bei dem der positive Anschluss und der negative Anschluss jeweils durch eine elektrisch leitfähige Schicht, insbesondere eine Schoopschicht gebildet ist.

Die Speichereinheit ist bevorzugt ein Zwischenkreiskondensator, insbesondere ein Zwischenkreiskondensator eines elektrischen Antriebs eines Elektrofahrzeuges.

Bevorzugt ist die Speichereinheit mit der Außenfläche - bevorzugt getrennt durch den Isolator - mit dem weiteren, insbesondere zum Fluidführen ausgebildeten Kühlelement oder dem Kühlkörper mit Kühlrippen thermisch leitfähig verbunden.

In einer anderen Ausführungsform ist das weitere Kühlelement bevorzugt ein Kühldom, der mit einem Fluidkreislauf verbunden ist.

Der Kühlkörper weist bevorzugt wenigstens einen flach ausgebildeten Oberflächenbereich als Kontaktfläche auf, welcher ausgebildet ist, mit der Außenfläche verbunden zu werden. Der Kühlkörper weist auch bevorzugt voneinander räumlich beabstandete Rippen auf, welche thermisch leitend mit der Kontaktfläche verbunden sind. Mittels der Rippen kann der Kühlkörper beispielsweise mittels Konvektion oder Zwangskonvektion Wärme an eine Umgebungsluft abführen.

In einer anderen Ausführungsform ist das Kühlelement, insbesondere die Platte vorteilhaft ausgebildet, mit einem Kühlkreislauf eines Motors, beispielsweise dem eines Elektromotors verbunden zu werden. Dazu kann das Kühlelement oder das mit dem Kühlelement verbundene weitere Kühlelement einen Hohlraum zum Führen eines Fluids aufweisen. So kann das Kühlelement vorteilhaft in einen Kühlkreislauf eingebunden werden, der ein Fluid, insbesondere Kühlwasser führt. So kann vorteilhaft eine Grenztemperatur des Energiespeichers, beispielsweise 105 Grad Celsius, nicht überschritten werden.

Der Energiespeicher ist beispielsweise mit dem Kühlelement mit einen fluidführenden Wärmetauscher, beispielsweise einen Wasser-Wärmetauscher oder einen Wasser-Luft-Wärmetauscher als weiteres Kühlelement verbunden. Bevorzugt weist der Wärmetauscher eine der Außenfläche entsprechende Kontaktfläche auf, die mit der Außenfläche verbunden ist. Denkbar ist auch eine Variante des Energiespeichers, in der die Außenfläche von Kühlwasser angespült werden kann. dazu kann das weitere zum Fluidführen ausgebildete Kühlelement eine Öffnung aufweisen, die die Außenfläche mit dem zum Fluidführen ausgebildeten Hohlraum verbindet.

Die Erfindung betrifft auch ein Elektrofahrzeug mit einem Kühlkreislauf, welcher ausgebildet ist, einen Elektromotor des Elektrofahrzeugs zu kühlen. Das Kühlelement der Speichereinheit ist bevorzugt mit dem Kühlkreislauf wirkverbunden. Bevorzugt bildet der Kühlkreislauf auch bei seiner Maximaltemperatur eine Wärmesenke für den Energiespeicher, dessen Maximaltemperatur größer als die des Kühlkreislaufs ist. Der Kühlkreislauf weist bevorzugt einen Wärmetauscher auf, wobei die Speichereinheit mit der Außenfläche mit dem Wärmetauscher wirkverbunden ist.

Der Kühlkreislauf weist beispielsweise eine Maximaltemperatur zwischen 50 und 90 Grad Celsius auf, bevorzugt 65 Grad Celsius bei Elektrofahrzeugen und 85 Grad Celsius bei Hybridfahrzeugen. Beispielsweise beträgt die Maximaltemperatur des Energiespeichers zwischen 90 und 125, bevorzugt 105 Grad Celsius.

Figur 1 zeigt schematisch ein Ausführungsbeispiel für eine teilweise dargestellte Speichereinheit, welche ausgebildet ist, Wärme von einem elektrischen Anschluss eines Energiespeichers an eine Bodenplatte der Speichereinheit abzuführen;

Figur 2 zeigt schematisch die in Figur 1 teilweise dargestellte Speichereinheit in einer Explosionsdarstellung.

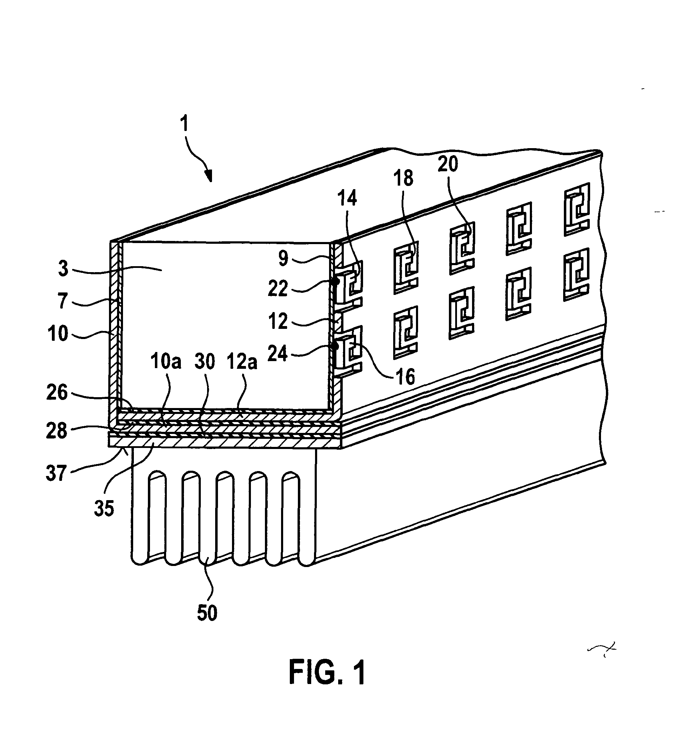

Figur 1 zeigt schematisch ein Ausführungsbeispiel für eine Speichereinheit 1. Die Speichereinheit 1 weist einen Energiespeicher 3 auf. Der Energiespeicher 3 weist einen positiven elektrischen Anschluss 7 auf, welcher in Form einer elektrisch leitfähigen Schicht, insbesondere einer Metallschicht gebildet ist. Die Metallschicht ist beispielsweise eine Schoopschicht, welche beispielsweise durch eine Legierung umfassend Kupfer und Zink gebildet ist. In einer anderen Ausführungsform oder zusätzlich dazu ist die Schoopschicht aus Aluminium gebildet.

Der Energiespeicher 3 weist auch einen negativen elektrischen Anschluss 9 auf. Der negative elektrische Anschluss 9 ist durch eine Schicht, insbesondere eine elektrisch leitfähige Metallschicht, beispielsweise eine Schoopschicht gebildet. Der Energiespeicher 3 ist in diesem Ausführungsbeispiel quaderförmig ausgebildet. Die mittels elektrisch leitfähige Schichten gebildeten Anschlüsse 7 und 9 sind jeweils flach, bevorzugt eben ausgebildet und sind an zueinander gegenüberliegenden Stirnseiten des Energiespeichers angeordnet. Zwischen den Stirnseiten des Energiespeichers 3 erstreckt sich beispielsweise eine Längsachse, um die ein Kondensator, insbesondere ein Wickelkondensator gewickelt ist. Die Längsachse erstreckt sich somit orthogonal zu den Schichten 7 und 9.

Die Schicht 9, welche den negativen elektrischen Anschluss des Energiespeichers 3 bildet, ist in diesem Ausführungsbeispiel mit einem L-förmigen Kontakt 14 mittels einer Schweißverbindung, insbesondere einer Punktschweißverbindung 22 elektrisch verbunden. Dargestellt ist auch ein L-förmiger Kontakt 16, welcher mittels einer Punktschweißverbindung 24 mit dem Anschluss 9 elektrisch verbunden ist. Die L-förmigen Kontakte sind jeweils durch Stanzen aus einem Blech gebildet, welches eine Kontaktschiene 12 bildet. Die Kontakte 14 und 16 sind in diesem Ausführungsbeispiel an die Kontaktschiene 12 angeformt. Dargestellt sind auch weitere L-förmige Kontakte, von denen die Kontakte 18 und 20 beispielhaft bezeichnet sind. Die L-förmigen Kontakte federn bei einer thermischen Ausdehnung des Energiespeichers vorteilhaft in drei Dimensionen, so dass der Kontakt nicht von dem Anschluss abreißen kann.

Die Kontaktschiene 12 ist in diesem Ausführungsbeispiel durch ein abgewinkeltes Blech gebildet, wobei ein abgewinkelter Abschnitt 12a der Kontaktschiene 12 sich in diesem Ausführungsbeispiel senkrecht zu dem Abschnitt erstreckt, in dem die Kontakte ausgebildet sind. Die Speichereinheit 1 weist auch eine negative Kontaktschiene 10 auf, welche - wie die Kontaktschiene 12 - mit einer elektrisch leitfähigen Schicht 7 verbunden ist, wobei die elektrisch leitfähige Schicht 7 den negativen Anschluss des Energiespeichers 3 bildet. Die Schicht 7 ist beispielsweise durch eine Schoopschicht gebildet. Die negative Kontaktschiene 10 weist wie die positive Kontaktschiene 12 einen abgewinkelten Abschnitt 10a auf, welcher sich senkrecht zu dem Abschnitt der Kontaktschiene erstreckt, welcher mit dem elektrischen Anschluss 7 elektrisch verbunden ist.

Die Kontakte der Kontaktschienen 10 und 12, welche jeweils mit dem Anschluss 7 beziehungsweise 9 verbunden sind, erstrecken sich in diesem Ausführungsbeispiel parallel zu den schichtförmig gebildeten Anschlüssen 7 und 9 und können diese beispielsweise berühren. Dadurch kann ein zusätzlicher elektrischer galvanischer Kontakt gebildet sein, welcher neben den Schweißverbindungen 22 und 24 die Anschlüsse mit den Kontaktschienen elektrisch verbindet, insbesondere wenn die Schweißverbindung reißt.

Die abgewinkelten Abschnitte 10a und 12a der Kontaktschienen 10 und 12 sind in diesem Ausführungsbeispiel einander überlappend angeordnet, wobei die sich jeweils eben erstreckenden Blechbereiche der Abschnitte 10a und 12a einander überlappen und so übereinander liegen. Zwischen den Abschnitten 10a und 12a ist eine elektrisch isolierende und thermisch leitfähige Isolationsschicht 28 angeordnet. Die Isolationsschicht 28 umfasst eine Polyimidfolie, , die eine Dicke von 20 bis 30 Mikrometern aufweist. Alternativ ist es auch möglich eine Silicone Molding Resin Folie oder eine Thermoplastic Polyurethan Folie zu verwenden.

Die Polyimidfolie ist beidseitig mit einem Klebstoffstoff beschichtet, wobei die Dicke der Klebstoffschicht auf beiden Seiten bevorzugt 40 bis 60 Mikrometer beträgt. Der Klebstoff kann beispielsweise als Acryllebstoff ausgebildet sein und zur Verbesserung der Wärmeleitfähigkeit Keramikpartikel, wie z.B. Aluminiumoxidpartikel, Siliziumoxidpartikel, Siliziumnitridpatrtikel, Bornitrid-Partikel, AlSi-Partikel, oder Aluminiumnitrid-Partikel aufweisen. Die Wärmeleitfähigkeit der Isolationsschicht beträgt bevorzugt mehr als 0,4 W/mK.

Die Kontaktschienen 10 und 12 bilden so eine Art Rinne oder Wanne, welche den Energiespeicher 3 wenigstens teilweise, in diesem Ausführungsbeispiel vollständig, aufnimmt. Die Blechabschnitte der Kontaktschienen 10 und 12, welche sich parallel zueinander erstrecken und jeweils mit einem Anschluss des Energiespeichers 3 verbunden sind, bilden jeweils eine Wand der Rinne.

Die Kontaktschienen sind in diesem Ausführungsbeispiel aus Blech gebildet, das eine Dicke zwischen 0,5 und 2 Millimeter aufweist. Die Speichereinheit weist beispielsweise eine Länge von 20 bis 30 Zentimeter und ein Abstand zwischen den Kontaktschienen von 3 bis 5 Zentimeter auf. Der Abschnitt 10a oder 12a bildet einen Boden der Rinne oder Wanne, je nach dem, welcher Abschnitt auf dem anderen liegt und so zu dem Energiespeicher 3 hinweist. Zwischen dem Abschnitt, welcher den Boden der Rinne oder Wanne bildet und dem Energiespeicher 3 ist in diesem Ausführungsbeispiel eine elektrische Isolationsschicht 26 angeordnet.

Der Abschnitt 12a der Kontaktschiene 12 bildet in diesem Ausführungsbeispiel einen Boden des Innenraums der mittels der Kontaktschienen 10 und 12 gebildeten Rinne, wohingegen der Abschnitt 10a der Kontaktschiene 10 einen Teil des Bodens bildet, welcher mit einer Oberfläche nach außen weist. Die nach außen weisende Oberfläche des Abschnitts 10a ist in diesem Ausführungsbeispiel mit einer wärmeleitfähigen Platte 35, in diesem Ausführungsbeispiel einer Aluminiumplatte, verbunden. Die Platte 35 bildet in diesem Ausführungsbeispiel ein Kühlelement, an das Wärme abgeführt werden kann.

Die in dem Energiespeicher 3 erzeugte Wärme kann so vorteilhaft über die elektrischen Anschlüsse 7 und 9, weiter über die Schweißverbindungen 22 und 24, über die L-fömigen Kontakte 14 und 16, und weiter über die Kontaktschiene 12 zu dem abgewinkelten Bereich 12a der Kontaktschiene 12 fließen, von dort fließt die Wärme weiter über den Isolator 28 in den abgewinkelten Abschnitt 10a der Kontaktschiene 10, welcher zusammen mit dem Abschnitt 12a den Boden der Rinne bildet, die den Energiespeicher 3 aufnimmt. Von dem abgewinkelten Abschnitt 10a kann die Wärme weiter über einen thermisch leitfähigen elektrischen Isolator 30, welcher in diesem Ausführungsbeispiel durch eine Isolationsschicht, insbesondere eine Isolationsfolie gebildet ist, zu der Platte 35 fließen, welche in diesem Ausführungsbeispiel eine Wärmesenke bildet. Die Platte 35 weist einen Oberflächenbereich auf, der eine Aussenfläche 37 der Speichereinheit 1 bildet. Mit der Aussenfläche 37 Platte 35 ist in diesem Ausführungsbeispiel ein Kühlkörper 50 thermisch leitfähig verbunden, wobei der Kühlkörper 50 zueinander beabstandete Kühlrippen aufweist, welche mittels Konvektion Wärme an eine Umgebungsluft abgeben kann. denkbar ist auch ein zum Fluidführen ausgebildeter Wärmetauscher als weiteres Kühlelement, oder eine Platte 35, die einen zum Fluidführen ausgebildeten Hohlraum aufweist.

Der Isolator 30 ist in diesem Ausführungsbeispiel als Isolationsfolie aus Polyimid ausgebildet, die ein- oder beidseitig mit einem wärmeleitenden Klebstoff beschichtet ist. Der Klebstoff kann beispielsweise als Acryllebstoff ausgebildet sein und zur Verbesserung der Wärmeleitfähigkeit Keramikpartikel, wie z.B. Aluminiumoxidpartikel, Siliziumoxidpartikel, Siliziumnitridpatrtikel, Bornitrid-Partikel, AlSi-Partikel, oder Aluminiumnitrid-Partikel aufweisen. Die Dicke der Isolationsfolie beträgt dabei bevorzugt 20 bis 30 Mikrometer, die Dicke der Klebstoffschichten bevorzugt jeweils 40 bis 110 Mikrometer. Es ist beispielsweise auch möglich auf einer oder auf beiden Seiten der Folie nur eine partielle Beschichtung mit dem Klebstoff vorzusehen. Die freigehaltenen Abschnitte können bevorzugt Kanäle ausbilden, die das Einschließen von Luftblasen in die Klebstoffschicht verhindern.

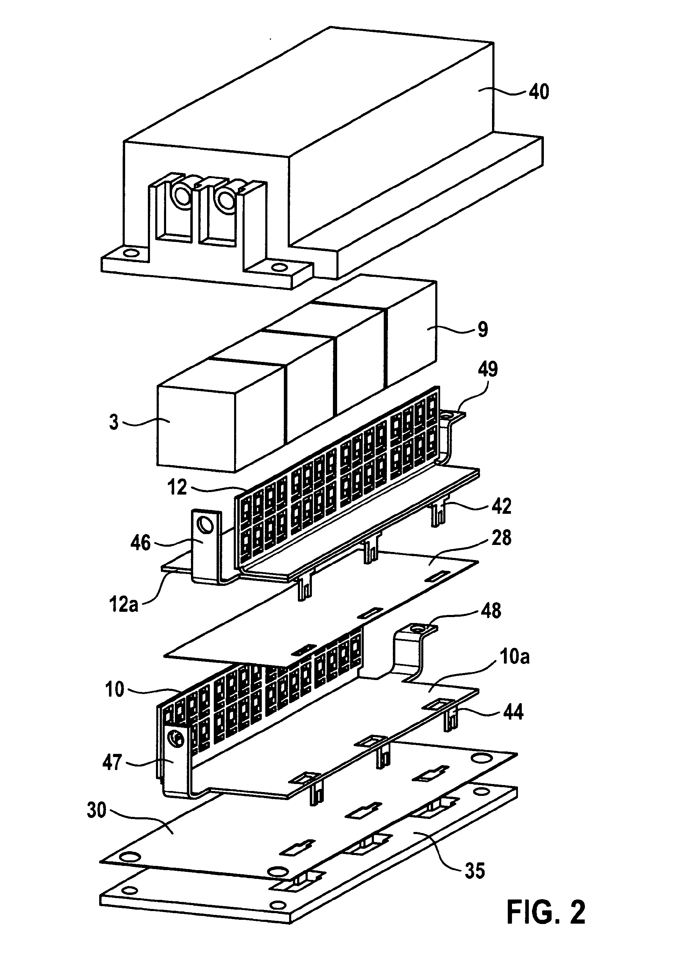

Figur 2 zeigt den in Figur 1 bereits teilweise dargestellten Energiespeicher 1 in einer Explosionsdarstellung. Der Energiespeicher 1 weist in Figur 2 ein Gehäuse 40 auf, welches beispielsweise durch ein Kunststoffgehäuse gebildet ist. Das Gehäuse 40 nimmt den Energiespeicher 3 auf, welcher-wie in Figur 1 bereits dargestellt - an Stirnseiten des Energiespeichers 3 angeordnete Schoopschichten 7 und 9 aufweist, welche jeweils einen elektrischen Anschluss des Energiespeichers 3 bilden. Das Gehäuse 40 nimmt auch die Kontaktschiene 12 und die Kontaktschiene 10 auf. Die Kontaktschienen 10 und 12 bilden zusammen -wie in Figur 1 bereits dargestellt - eine Art Rinne oder Wanne, welche den Energiespeicher 3 aufnimmt.

An den abgewinkelten Abschnitt 12a der Kontaktschiene 12 ist in diesem Ausführungsbeispiel ein äußerer Anschluss 46 und ein äußerer Anschluss 49 angeformt. An die äußeren elektrischen Anschlüsse 46 und 49 kann beispielsweise eine Traktionsbatterie eines elektrischen Antriebs angeschlossen werden. Die Kontaktschiene 12 weist auch weitere elektrische äußere Anschlüsse zum anschließen des Energiespeichers an eine Leistungsendstufe eines Elektromotors des elektrischen Antriebs auf, von denen der Anschluss 42 beispielhaft bezeichnet ist. Der Anschluss 42 erstreckt sich senkrecht zu einer Ebene des abgewinkelten Abschnitts 12a der Kontaktschiene 12. Zwischen der Kontaktschiene 10 und der Kontaktschiene 12, insbesondere zwischen den Abschnitten 10a und 12a der Kontaktschienen 10 und 12 ist die in Figur 1 bereits dargestellte Isolationsschicht 28 angeordnet. Zwischen dem abgewinkelten Abschnitt 10a der Kontaktschiene 12 und der Aluminiumplatte 35 ist eine wärmeleitfähige elektrische Isolationsschicht 30 angeordnet. Der abgewinkelte Abschnitt 10a weist für jeden äußeren elektrischen Anschluss wie den Anschluss 42 einen Durchbruch auf, durch welchen der Anschluss 42 hindurchgreifen kann. Die Isolationsschicht 28 und die Isolationsschicht 30 weist entsprechende Durchbrüche auf. Die Platte 35 weist Durchbrüche auf, durch welche die Anschlüsse wie der äußere elektrische Anschluss 42 hindurchgreifen kann. Die Platte 10a weist wie die Platte 12a äußere elektrische Anschlüsse 44 zum Verbinden mit der Leistungsendstufe auf, welche sich senkrecht zur Ebenenerstreckung des abgewinkelten Abschnitts 10a erstrecken und von denen der äußere Anschluss 44 beispielhaft bezeichnet ist. Die Kontaktschiene 10 weist einen äußeren elektrischen Anschluss 47 und einen äußeren elektrischen Anschluss 48 auf, welche jeweils an den abgewinkelten Abschnitt 10a der Kontaktschiene 10 angeformt sind. Über die Anschlüsse 47 und 48 kann beispielsweise die bereits erwähnte Traktionsbatterie des elektrischen Antriebs angeschlossen werden.

Die Isolationsschichten 30, 28 und 26 sind jeweils beispielsweise durch eine wenigstens auf einer Seite mit einer Klebstoffschicht beschichteten Polyimid-Folie gebildet. Mittels der Klebstoffschicht können die Komponenten der Speichereinheit 1 einfach zusammengefügt werden. Die Abschnitte der Kontaktschienen 10 und 12, welche jeweils senkrecht zueinander verlaufen, können jeweils aneinander angeformt sein und beispielsweise durch Abwinkeln einer ebenen Platte erzeugt sein. Denkbar ist auch ein senkrechtes Zusammenfügen von zwei ebenen Platten, beispielsweise mittels Schweißen oder Löten, um die Kontaktschienen mit zueinander senkrecht verlaufenden Abschnitten zu erzeugen.

## Patentansprüche

1. Speichereinheit (1) zum Speichern elektrischer Energie,
mit wenigstens einem Energiespeicher (3), welcher wenigstens einen positiven elektrischen Anschluss (7) und wenigstens einen negativen elektrischen Anschluss (9) aufweist und ausgebildet ist, über den positiven und den negativen Anschluss (7, 9) mit elektrischer Energie aufgeladen und entladen zu werden,
**dadurch gekennzeichnet, dass**
der positive (7) und/oder der negative (9) Anschluss mindestens mittelbar wenigstens thermisch mit einem wärmeleitfähig ausgebildeten Kühlelement (35) wirkverbunden ist, so dass über den elektrischen Anschluss (7, 9) Wärme aus dem Energiespeicher (3) an das Kühlelement (35) abgeführt werden kann,
wobei die Speichereinheit (1) eine mit dem positiven Anschluss (7) verbundene Kontaktschiene (10) und eine mit dem negativen Anschluss (9) verbundene Kontaktschiene (12) aufweist, wobei die Kontaktschienen (10, 12) jeweils mit wenigstens einem äußeren elektrischen Anschluss (42, 44, 46, 47, 48, 49) verbunden sind und jeweils ausgebildet sind, den elektrischen Anschluss (7, 9) des Energiespeichers (3) mit dem äußeren Anschluss (42, 44, 46, 47, 48, 49) elektrisch zu verbinden, wobei die positive und/oder negative Kontaktschiene (10, 12) mit dem Kühlelement (35) thermisch leitend verbunden ist,
wobei die Kontaktschienen (10, 12) jeweils mit einem Oberflächenbereich der Kontaktschienen (10A, 12A) thermisch leitend und elektrisch isolierend miteinander verbunden sind, so dass Wärme von einer Kontaktschiene (12) über die andere Kontaktschiene (10) zum Kühlelement (35) fließen kann.

2. Speichereinheit (1) nach Anspruch 1,
**dadurch gekennzeichnet, dass**
die Kontaktschienen (10, 12) jeweils durch ein winkelförmiges Blech gebildet sind und zusammen eine Rinne bilden, in welcher der Energiespeicher (3) wenigstens teilweise aufgenommen ist.

3. Speichereinheit (1) nach einem der vorhergehenden Ansprüche,
**dadurch gekennzeichnet, dass**
das Kühlelement (35) durch einen Teil der Kontaktschiene (10,12) gebildet ist.

4. Speichereinheit (1) nach einem der vorhergehenden Ansprüche,
**dadurch gekennzeichnet, dass**
die andere Kontaktschiene (10) mit einer dem Flächenbereich gegenüberliegenden Oberfläche mit dem Kühlelement (35) thermisch leitend verbunden ist.

5. Speichereinheit (1) nach einem der vorhergehenden Ansprüche,
**dadurch gekennzeichnet, dass**
ein Oberflächenbereich des Kühlelements (35) eine Außenfläche (37) der Speichereinheit (1) und ist ausgebildet, die Wärme über die Außenfläche (37) der Speichereinheit (1) an eine Umgebung, einen Kühlkörper (50) oder ein weiteres Kühlelement abzugeben, und das Kühlelement (35) mit der Aussenfläche (37) mit einem thermisch leitfähig und elektrisch isolierend ausgebildeten flachen Isolator (30) verbunden ist, wobei die Speichereinheit (1) über den Isolator (30) mit dem Kühlkörper (50) oder dem weiteren Kühlelement galvanisch getrennt verbunden werden kann.

6. Speichereinheit (1) nach Anspruch 5,
**dadurch gekennzeichnet, dass**
der Isolator (30) mit einer der Aussenfläche (37) gegenüberliegenden Fläche mit dem Kühlkörper (50) oder dem weiteren Kühlelement verbunden ist.

7. Speichereinheit (1) nach Anspruch 5 oder 6,
**dadurch gekennzeichnet, dass**
das Kühlelement (35) eine flach ausgebildete Platte ist.

8. Speichereinheit (1) nach Anspruch 5 oder 6,
**dadurch gekennzeichnet, dass**
das Kühlelement (35) mit einem Kühlkörper (50) mit Kühlrippen oder einem zum Fluidführen ausgebildeten weiteren Kühlelement thermisch leitfähig verbunden ist.

9. Speichereinheit (1) nach einem der vorhergehenden Ansprüche,
**dadurch gekennzeichnet, dass**
das Kühlelement (35) einen zum Fluidführen ausgebildeten Hohlraum aufweist.

## Claims

1. Accumulator unit (1) for storing electrical energy,
having at least one energy accumulator (3) which has at least one positive electrical terminal (7) and at least one negative electrical terminal (9) and is designed to be charged with electrical energy, and discharged, via the positive and negative terminals (7, 9),
**characterized in that**
the positive terminal (7) and/or the negative terminal (9) are/is operatively connected at least indirectly in an at least thermal fashion to a cooling element (35) which is embodied in a thermally conductive form, with the result that heat from the energy accumulator (3) can be discharged to the cooling element (35) via the electrical terminal (7, 9),
wherein the accumulator unit (1) has a contact rail (10) which is connected to the positive terminal (7) and a contact rail (12) which is connected to the negative terminal (9), wherein the contact rails (10, 12) are each connected to at least one external electrical terminal (42, 44, 46, 47, 48, 49) and are each designed to electrically connect the electrical terminal (7, 9) of the energy accumulator (3) to the external terminal (42, 44, 46, 47, 48, 49), wherein the positive and/or negative contact rail or rails (10, 12) are/is connected in a thermally conductive fashion to the cooling element (35),
wherein the contact rails (10, 12) are each connected in a thermally conductive fashion to a surface region of the contact rails (10A, 12A) and in such a way as to be electrically insulated from one another, with the result that heat from one contact rail (12) can flow to the cooling element (35) via the other contact rail (10).

2. Accumulator unit (1) according to Claim 1,
**characterized in that**
the contact rails (10, 12) are each formed by an angular piece of sheet metal and together form a channel in which the energy accumulator (3) is at least partially accommodated.

3. Accumulator unit (1) according to one of the preceding claims,
**characterized in that**
the cooling element (35) is formed by part of the contact rail (10, 12).

4. Accumulator unit (1) according to one of the preceding claims,
**characterized in that**
the other contact rail (10) is connected in a thermally conductive fashion, by a surface lying opposite the planar region, to the cooling element (35).

5. Accumulator unit (1) according to one of the preceding claims,
**characterized in that**
a surface region of the cooling element (35) is an external surface (37) of the accumulator unit (1) and is designed to output the heat via the external surface (37) of the accumulator unit (1) to a surrounding area, a cooling body (50) or a further cooling element, and the cooling element (35) is connected by the external surface (37) to a flat isolator (30) embodied in a thermally conductive and electrically insulating fashion, wherein the accumulator unit (1) can be connected in a galvanically isolated fashion to the cooling body (50) or the further cooling element via the isolator (30).

6. Accumulator unit (1) according to Claim 5,
**characterized in that**
the isolator (30) is connected, by a surface lying opposite the external surface (37), to the cooling body (50) or to the further cooling element.

7. Accumulator unit (1) according to Claim 5 or 6,
**characterized in that**
the cooling element (35) is a plate of flat design.

8. Accumulator unit (1) according to Claim 5 or 6,
**characterized in that**
the cooling element (35) is connected in a thermally conductive fashion to a cooling body (50) with cooling fins, or to a further cooling element which is embodied to conduct fluid.

9. Accumulator unit (1) according to one of the preceding claims,
**characterized in that**
the cooling element (35) has a cavity which is designed to conduct fluid.

## Revendications

1. Unité de stockage (1) pour le stockage d'énergie électrique,
avec au moins un accumulateur d'énergie (3), lequel présente au moins une connexion électrique positive (7) et au moins une connexion électrique négative (9) et est réalisé pour être chargé et déchargé en énergie électrique par l'intermédiaire des connexions positive et négative (7, 9),
**caractérisée en ce que** la connexion positive (7) et/ou négative (9) est en liaison opérative au moins indirectement de manière au moins thermique avec un élément de refroidissement (35) réalisé de manière à pouvoir conduire la chaleur, de sorte que via la connexion électrique (7, 9), il est possible d'évacuer de la chaleur de l'accumulateur d'énergie (3) vers l'élément de refroidissement (35),
l'unité de stockage (1) présentant un rail de contact (10) en liaison avec la connexion positive (7) et un rail de contact (12) en liaison avec la connexion négative (9), les rails de contact (10, 12) étant respectivement en liaison avec au moins une connexion électrique externe (42, 44, 46, 47, 48, 49) et étant respectivement réalisés pour connecter électriquement la connexion électrique (7, 9) de l'accumulateur d'énergie (3) à la connexion externe (42, 44, 46, 47, 48, 49), le(s) rail(s) de contact positif et/ou négatif (10, 12) étant relié(s) de manière thermoconductrice à l'élément de refroidissement (35),
les rails de contact (10, 12) étant respectivement reliés ensemble par une zone de surface des rails de contact (10A, 12A) de manière thermoconductrice et de manière à isoler électriquement, de sorte que de la chaleur puisse se répandre d'un rail de contact (12) via l'autre rail de contact (10) jusqu'à l'élément de refroidissement (35).

2. Unité de stockage (1) selon la revendication 1,
**caractérisée en ce que** les rails de contact (10, 12) sont respectivement formés par une tôle angulaire et forment ensemble une goulotte dans laquelle l'accumulateur d'énergie (3) est au moins partiellement réceptionné.

3. Unité de stockage (1) selon l'une des revendications précédentes,
**caractérisée en ce que** l'élément de refroidissement (35) est formé par une partie du rail de contact (10, 12).

4. Unité de stockage (1) selon l'une des revendications précédentes,
**caractérisée en ce que** l'autre rail de contact (10) est relié, par une surface située en vis-à-vis de la zone de surface, de manière thermoconductrice à l'élément de refroidissement (35).

5. Unité de stockage (1) selon l'une des revendications précédentes,
**caractérisée en ce qu'**une zone de surface de l'élément de refroidissement (35) forme une surface extérieure (37) de l'unité de stockage (1) et est réalisée pour transmettre la chaleur via la surface extérieure (37) de l'unité de stockage (1) à un environnement, un corps de refroidissement (50) ou un autre élément de refroidissement, et **en ce que** l'élément de refroidissement (35) est relié par la surface extérieure (37) à un isolateur (30) plat à capacité thermoconductrice et réalisé de manière à isoler électriquement, l'unité de stockage (1) pouvant être reliée via l'isolateur (30) au corps de refroidissement (50) ou à l'autre élément de refroidissement de manière séparée galvaniquement.

6. Unité de stockage (1) selon la revendication 5,
**caractérisée en ce que** l'isolateur (30) est relié par une surface située en vis-à-vis de la surface extérieure (37) au corps de refroidissement (50) ou à l'autre élément de refroidissement.

7. Unité de stockage (1) selon la revendication 5 ou 6,
**caractérisée en ce que** l'élément de refroidissement (35) est une plaque réalisée de manière plate.

8. Unité de stockage (1) selon la revendication 5 ou 6,
**caractérisée en ce que** l'élément de refroidissement (35) est relié de manière à pouvoir être conducteur thermiquement à un corps de refroidissement (50) avec des ailettes de refroidissement ou à un autre élément de refroidissement réalisé pour faire circuler du fluide.

9. Unité de stockage (1) selon l'une des revendications précédentes,
**caractérisée en ce que** l'élément de refroidissement (35) présente un espace creux réalisé pour faire circuler du fluide.
